# EUROPEAN PATENT SPECIFICATION

(11) **EP 2 755 079 B1**
(45) Date of publication and mention of the grant of the patent: **26.07.2017**
(21) Application number: 13184497.9
(22) Date of filing: 16.09.2013
(51) Int. Cl.: G02F 1/1335, G02F 1/1333

(54) **Display apparatus**
Anzeigevorrichtung
Appareil d'affichage

(30) Priority: 14.01.2013 KR 20130003776
(43) Date of publication of application: 16.07.2014
(73) Proprietor: Samsung Display Co., Ltd., Gyeonggi-do (KR)
(72) Inventor: Hwang, Sang-Ho, Suwon-si, Gyeonggi-do 604-1603, 27 (KR); Kim, Joo-Young, Suwon-si, Gyeonggi-do 103-1002, 239 (KR)
(74) Representative: Dr. Weitzel & Partner

(56) References cited:
- EP-A1- 1 950 603
- CN-A- 102 494 276
- CN-U- 202 074 348
- CN-U- 202 275 236
- US-A- 6 166 788
- US-A1- 2003 223 020
- US-A1- 2010 147 582
- US-B1- 6 690 435

## Description

### BACKGROUND

### 1. Field

Exemplary embodiments of the invention relate to a display panel.

More particularly, exemplary embodiments of the invention relate to display apparatus having a backlight module capable of minimizing a thickness thereof.

### 2. Description of the Related Art

A liquid crystal display apparatus displays an image using a property of liquid crystal in that light transmittance of the liquid crystal changes according to an electric field. Thus, the liquid crystal display apparatus includes a display panel displaying the image and a backlight providing light to the display panel.

The liquid crystal display apparatus includes the backlight, and the display panel on the backlight. The liquid crystal display apparatus further includes an upper frame to fix the backlight and the display panel, a plurality of inside support molding parts and a lower frame.

The upper frame and the lower frame fix the overall display panel within the liquid crystal display apparatus. The molding parts fix the backlight and the display panel.

A display apparatus such as the liquid crystal display apparatus having a reduced thickness has been studied. An overall thickness of a display panel and a backlight of the display apparatus should be decreased to manufacture the display apparatus having the reduced thickness. Since decreasing a thickness of the display panel has no significant benefits, decreasing a thickness of the backlight has been examined. The thickness of the backlight may be decreased by reducing a thickness of one or more elements of the backlight to decrease the overall thickness of the display apparatus including the backlight.

Especially, as technology evolves, a light guiding plate recently developed as an element of the backlight may have a reduced thickness as compared to a traditional light guiding plate.

However, a reduced thickness of the light guiding plate may undesirably cause deformation of the light guiding plate. The light guiding plate having the reduced thickness may include materials which may be easily deformed by heat, etc.

The display apparatus includes the molding parts to fix the backlight, so that deformation of the backlight may be reduced or effectively prevented. Thus, there remains a need for supporting structures related to the molding parts, to fix and support the light guiding plate having the reduced thickness.

CN 202 275 236 U discloses a display apparatus with those features as summarized in the preamble of claim 1. Further reference is made to CN 102 494 276 A, EP 1 950 603 A1, US 6 166 788 A, US 6 690 435 B1, US 2003/223020 A1, CN 202 074 348 U, US 2010/147582 A1.

### SUMMARY

The invention provides a display apparatus with the features of claim 1.

One or more exemplary embodiments of the invention also provides a display apparatus having the backlight module capable of reducing an overall thickness thereof.

According to an exemplary embodiment of the invention, a display apparatus comprises notably a backlight module which includes a combining bar, a light source and a light guiding plate. The combining bar includes an upper plate, a lower plate and an extending plate connecting the upper plate to the lower plate. The upper plate includes a display panel supporting portion. The light source is plate than the upper plate.

In an exemplary embodiment, a cross-sectional thickness of the lower plate may be larger than that of the upper plate.

In an exemplary embodiment, the combining bar may be an extrusion-molded member.

In an exemplary embodiment, the combining bar may include aluminum.

In an exemplary embodiment, the upper plate of the combining bar may further include a panel guiding portion facing a side surface of a display panel.

In an exemplary embodiment, the extending plate may be perpendicular to the upper plate and the lower plate.

In an exemplary embodiment, the backlight module may further include an insulating part disposed between the upper plate and the light guiding plate, and between the lower plate and the light guiding plate.

In an exemplary embodiment, the combining bar may further include a receiving groove defined in the lower plate and configured to receive the light source.

According to another exemplary embodiment of the invention, a display apparatus includes an upper frame, a display panel receiving light to display an image, a backlight module, and a lower frame combined with the upper frame. The backlight module includes a combining bar, a light source and a light guiding plate. The combining bar includes an upper plate, a lower plate and an extending plate connecting the upper plate to the lower plate. The upper plate includes a display panel supporting portion. The light source is disposed on the extending plate. The light guiding plate is disposed between the upper plate and the lower plate.

In an exemplary embodiment, the upper plate, the lower plate and the extending plate may be integral with each other and define a single, unitary, indivisible combining bar.

In an exemplary embodiment, a cross-sectional thickness of the lower plate may be larger than that of the upper plate.

In an exemplary embodiment, the lower plate may extend further from the extending plate than the upper plate.

In an exemplary embodiment, the combining bar may be an extrusion-molded member.

In an exemplary embodiment, the combining bar may include aluminum.

In an exemplary embodiment, the upper plate of the combining bar may further include panel guiding portion facing a side surface of the display panel.

In an exemplary embodiment, the display apparatus may further include a side combining part which respectively combines the extending plate of the combining bar, with the upper frame and lower frame.

In an exemplary embodiment, the combining bar may further include a receiving groove defined in the lower plate and configured to receive the light source.

In an exemplary embodiment, the display apparatus may further include an insulating part disposed between the upper plate and the light guiding plate, and between the lower plate and the light guiding plate.

In an exemplary embodiment, the display apparatus may further include an optical element disposed between the display panel and the light guiding plate. The upper plate may further include an optical element supporting portion. The optical element may be disposed on the optical element supporting portion to be supported by the optical element supporting portion.

According to one or more exemplary embodiment of the invention, although the light guiding plate has relatively small thickness, the combining bar is an integral member, so that the deformation of the light guiding plate by the heat may be reduced or effectively prevented.

In addition, the combining bar supports and fixes a plurality of elements of the display apparatus, so that a manufacturing process of the display apparatus may be simplified and manufacturing cost may be decreased.

In addition, the combining bar is formed (e.g., provided) by an extrusion molding process, so that the combining bar may be easily manufactured even though the combining bar has various cross-sectional thicknesses.

### BRIEF DESCRIPTION OF THE DRAWINGS

The above and other features of the invention will become more apparent by describing in detail exemplary embodiments thereof with reference to the accompanying drawings, in which:
FIG. 1 is a perspective view illustrating an exemplary embodiment of a display apparatus according to the invention;
FIG. 2 is a perspective view illustrating a portion of an exemplary embodiment of a backlight module of the display apparatus of FIG. 1;
FIG. 3 is a perspective view illustrating an exemplary embodiment of a combining bar of the backlight module of FIG. 2;
FIG. 4 is a cross-sectional view illustrating the display apparatus of FIG. 1;
FIG. 5 is a cross-sectional view illustrating another exemplary embodiment of a backlight module according to the invention;
FIG. 6 is a cross-sectional view illustrating still another exemplary embodiment of a backlight module according to the invention;
FIG. 7 is a cross-sectional view illustrating yet another exemplary embodiment of a backlight module according to the invention;
FIG. 8 is a cross-sectional view illustrating another exemplary embodiment of a display apparatus according to the invention;
FIG. 9 is a cross-sectional view illustrating still another exemplary embodiment of a display apparatus according to the invention;
FIG. 10 is a cross-sectional view illustrating a portion of an exemplary embodiment of a backlight module of the display apparatus of FIG. 9;

### DETAILED DESCRIPTION

It will be understood that when an element or layer is referred to as being "on," "connected to" or "coupled to" another element or layer, the element or layer can be directly on, connected or coupled to another element or layer or intervening elements or layers. In contrast, when an element is referred to as being "directly on," "directly connected to" or "directly coupled to" another element or layer, there are no intervening elements or layers present. As used herein, connected may refer to elements being physically and/or electrically connected to each other. Like numbers refer to like elements throughout. As used herein, the term "and/or" includes any and all combinations of one or more of the associated listed items.

It will be understood that, although the terms first, second, third, etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed below could be termed a second element, component, region, layer or section without departing from the teachings of the invention.

Spatially relative terms, such as "lower," "under," "above," "upper" and the like, may be used herein for ease of description to describe the relationship of one element or feature to another element(s) or feature(s) as illustrated in the figures. It will be understood that the spatially relative terms are intended to encompass different orientations of the device in use or operation, in addition to the orientation depicted in the figures. For example, if the device in the figures is turned over, elements described as "lower" or "under" relative to other elements or features would then be oriented "above" relative to the other elements or features. Thus, the exemplary term "under" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of the invention. As used herein, the singular forms "a," "an" and "the" are intended to include the plural forms as well, unless the context clearly indicates otherwise. It will be further understood that the terms "comprises," "comprising," "includes" and/or "including," when used in this specification, specify the presence of stated features, integers, operations, elements, and/or components, but do not preclude the presence or addition of one or more other features, integers, steps, operations, elements, components, and/or groups thereof.

Embodiments of the invention are described herein with reference to cross-section illustrations that are schematic illustrations of idealized embodiments (and intermediate structures) of the invention. As such, variations from the shapes of the illustrations as a result, for example, of manufacturing techniques and/or tolerances, are to be expected. Thus, embodiments of the invention should not be construed as limited to the particular shapes of regions illustrated herein but are to include deviations in shapes that result, for example, from manufacturing.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

All methods described herein can be performed in a suitable order unless otherwise indicated herein or otherwise clearly contradicted by context. The use of any and all examples, or exemplary language (e.g., "such as"), is intended merely to better illustrate the invention and does not pose a limitation on the scope of the invention unless otherwise claimed. No language in the specification should be construed as indicating any non-claimed element as essential to the practice of the invention as used herein.

Hereinafter, the invention will be explained in detail with reference to the accompanying drawings.

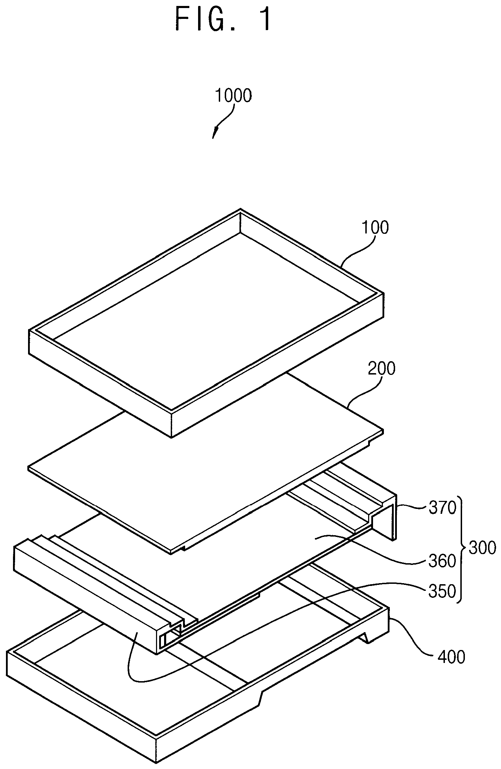

FIG. 1 is a perspective view illustrating an exemplary embodiment of a display apparatus according to the invention.

Referring to FIG. 1, a display apparatus 1000 includes an upper frame 100, a display panel 200 which is provided with light to display an image, a backlight module 300 and a lower frame 400 combined with the upper frame 100.

The backlight module 300 includes a combining bar 350, a light guiding plate 360 and a light source (not shown). The combining bar 350 is disposed between the upper frame 100 and the lower frame 400, and is configured to support elements of the display apparatus 1000. The combining bar 350 is a portion of the backlight module 300.

The backlight module 300 may further include a supporting bar 370. The supporting bar 370 may be disposed in the display apparatus 1000 opposite to the combining bar 350. The supporting bar 370 supports the backlight module 300. The combining bar 350 has various functions such as accommodating a light source therein and radiating heat from the light source. The supporting bar 370 may only function to support respective the elements in the display apparatus 1000, compared to those functions of the combining bar 350.

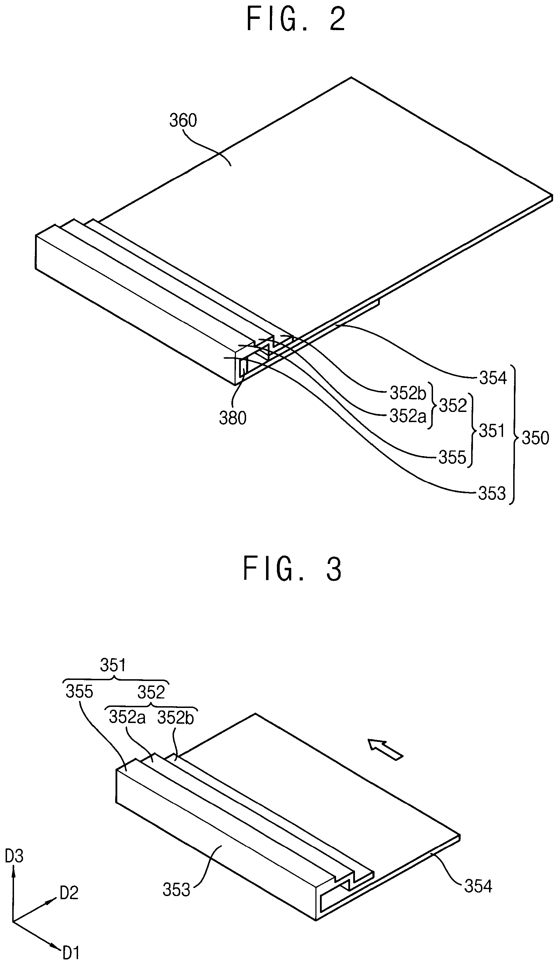

FIG. 2 is a perspective view illustrating a portion of an exemplary embodiment of a backlight module of the display apparatus of FIG. 1.

Referring to FIG. 2, a backlight module 300 includes the combining bar 350, the light guiding plate 360 and a light source 380. As mentioned in FIG. 1, the backlight module 300 may further include a supporting bar (not shown). The combining bar 350 includes an upper plate 351, an extending plate 353 and a lower plate 354. The upper plate 351 and the lower plate 354 are connected to each other by the extending plate 353. The upper plate 351 and the lower plate 354 extend in a substantially same direction. The extending plate 353 extends in a direction perpendicular to each of the upper plate 351 and the lower plate 354.

The combining bar 350 is disposed at a side of a receiving space defined in the display apparatus 1000 by the upper frame 100 and the lower frame 400.

The light guiding plate 360 is disposed between the upper plate 351 and the lower plate 354. The light guiding plate 360 is supported and fixed by the upper plate 351 and the lower plate 354. The light source 380 is disposed on the extending plate 353, and between the upper plate 351 and the lower plate 354, so that the light source 380 may be fixed and supported to be aligned with the light guiding plate 360. The light source 380 may be disposed in a space which is formed by the upper plate 351, the lower plate 354 and the extending plate 353.

FIG. 3 is a perspective view illustrating an exemplary embodiment of a combining bar of the backlight module of FIG. 2.

Referring to FIG. 3, the combining bar 350 includes the upper plate 351, the extending plate 353 and the lower plate 354.

The upper plate 351 may collectively include a plurality of horizontal portions on different planes from each other and forming a plurality of stepped portions. In the cross-sectional view of FIG. 3, the upper plate 351 includes three horizontal portions, but the invention is not limited thereto or thereby. The upper plate 351 has a length which extends in a first direction D1, and a width which extends in a second direction D2 perpendicular to the first direction D1. A cross-sectional thickness of the upper plate 351 is taken in a third direction D3, perpendicular to both the first and second directions D1 and D2.

The upper plate 351 includes a panel supporting part 352 supporting a display panel (not shown). The panel supporting part 352 supports the display panel which is disposed on the light guiding plate 360. The panel supporting part 352 may include two horizontal portions on different planes from each other, but the invention is not limited thereto or thereby. A width of the panel supporting part 352 may be taken in the second direction D2 in a direction from the extending plate 353 to a distal end edge of the upper plate 351. The panel supporting part 352 has a width corresponding to a non-display area of the display panel. In addition, the length of the panel supporting part 352 extends parallel to a length of the upper plate 351, that is, in the first direction D1. The horizontal portions of the panel supporting part 352 at different heights (e.g., in different planes from each other) form a step on which the display panel may be fixed. For example, the panel supporting part 352 may include a first panel supporting portion 352a and a second panel supporting portion 352b extending from the first panel supporting portion 352a. An upper surface of the second panel supporting portion 352b may be lower than that of the first panel supporting portion 352a, so that a stepped portion may be formed where the first panel supporting portion 352a and the second panel supporting portion 352b make contact with each other. The first panel supporting portion 352a may support and contact with a boundary or edge of the display panel. The second panel supporting portion 352b may supports and contact with a peripheral portion of the display panel which is adjacent to the boundary or edge of the display panel and has a thickness greater than that of the boundary or edge of the display panel.

Although the panel supporting part 352 has the width corresponding to the non-display area of the display panel, the lower plate 354 may have a width larger than that of the upper plate 351 and extend further than the panel supporting part 352. That is, the upper plate 351 of the combining bar 350 exposes a portion of the lower plate 354. The lower plate 354 is disposed adjacent to the light source 380 and makes contact with the lower frame 400, so that heat generated from the light source 380 may be dissipated through the lower plate 354 and the lower frame 400.

In addition, the lower plate 354 may have a width greater than that of the overall upper plate 351 in the second direction D2. Thus, each of the upper plate 351, the extending plate 353 and the lower plate 354 may have a width in the second direction D2 different from each other as occasion demands.

The upper plate 351 fixes and supports the display panel disposed on the light guiding plate 360, so that the upper plate 351 may affect an overall thickness of the display apparatus. Thus, the cross-sectional thickness of the upper plate 351 is minimized so as to minimize the overall cross-sectional thickness of the display apparatus 1000.

The lower plate 354 may dissipate the heat from the light source 380, and may reduce or effectively prevent deformation of the light guiding plate 360 at the same time. The heat from the light source 380 may be more efficiently dissipated as the lower plate 354 is wider in the second direction D2. Thus, the lower plate 354 may have a planar size larger than that of the upper plate 351. In addition, the lower plate 354 should have a sufficient cross-sectional thickness for such heat dissipation. Thus, a cross-sectional thickness of the lower plate 354 may be larger than that of the upper plate 351.

The extending plate 353 extends in the third direction D3, connects the upper plate 351 and the lower plate 354 to each other, and supports a frame member including the upper frame 100 and the lower frame 400 of the display apparatus 1000. A thickness of the extending plate 353 may be taken in the second direction D2, while a length thereof is defined in the first direction D1 and a width thereof is defined in the third direction D3. If the extending plate 353 is too thick in the second direction D2, then a width in the second direction D2 of a bezel of the display apparatus 1000 will be undesirably increased. The bezel may be considered a portion of the non-display area of the display apparatus 1000 in a plan view thereof. Therefore, a thickness of the extending plate 353 may have a proper thickness. If the extending plate 353 is too thin, supporting the backlight module 300 and the frame member may be difficult. Consequently, the extending plate 353 may be disposed to have sufficient thickness to connect the upper plate 351 and the lower plate 354 while supporting the frame member of the display apparatus 1000.

The upper plate 351 of the combining bar 350 may further include a panel guiding portion 355. The panel guiding portion 355 may include a horizontal portion of the upper plate 351, and this horizontal portion faces an inner side of the upper frame 100. The panel guiding portion 355 may be configured considering a cross-sectional thickness in the third direction D3 of the display panel which is supported by the panel supporting part 352, so that the display panel may be maintained in the frame member at a proper height within the display apparatus 1000. A boundary or edge side surface of the display panel faces an inner side surface of the panel guiding portion 355. Thus, the panel guiding portion 355 may guide the display panel to a proper position in the display apparatus, so that the panel guiding portion 355 may firmly fix the display panel in the display apparatus.

The upper plate 351, the extending plate 353 and the lower plate 354 of the combining bar 350 may be integral to define a single, unitary, indivisible combining bar 350. More particularly, in one exemplary embodiment, the upper plate 351, the extending plate 353 and the lower plate 354 of the combining bar 350 may be formed by an extrusion molding process. The upper plate 351, the extending plate 353 and the lower plate 354 of the combining bar 350 may be formed by the extrusion molding process in an arrow direction described in FIG. 3. Cross-sections of the elements of the combining bar 350 are uniform in the arrow direction, so that the combining bar 350 may be easily formed by the extrusion molding process. Whereas, in a traditional display apparatus, an inside support module is formed by a plurality of separately provided elements being subsequently combined each other, or formed by deforming a metal plate into a final shape such as by a bending process.

When the inside support module of the traditional display apparatus is formed by a plurality of separately provided elements being subsequently combined each other, elements corresponding to the upper plate 351 and the lower plate 354 may move individually from their designed positions, so that a height of a light guiding plate may not be uniformly maintained. Moreover, when the light guiding plate in the traditional display apparatus is relatively thin, the light guiding plate may be easily deformed by heat. Thus, when the inside support module is formed by a plurality of separately provided elements being subsequently combined each other, the inside support module cannot prevent deformation of the light guiding plate. In addition, deformation of the light guiding plate may cause misalignment with a light source, so that a display quality of the traditional display apparatus may decline.

In addition, when the inside support module is formed by bending a metal plate, the metal plate may have only one specific cross-sectional thickness, so that the inside support module may not be formed in various shapes such as including varying widths and thicknesses taken in respective directions. Thus, in one exemplary embodiment, the illustrated exemplary embodiment, the combining bar 350 may be formed (e.g., provided) by extruding a metal material. The metal material may include aluminum series or alloy thereof, but the invention is not limited thereto or thereby.

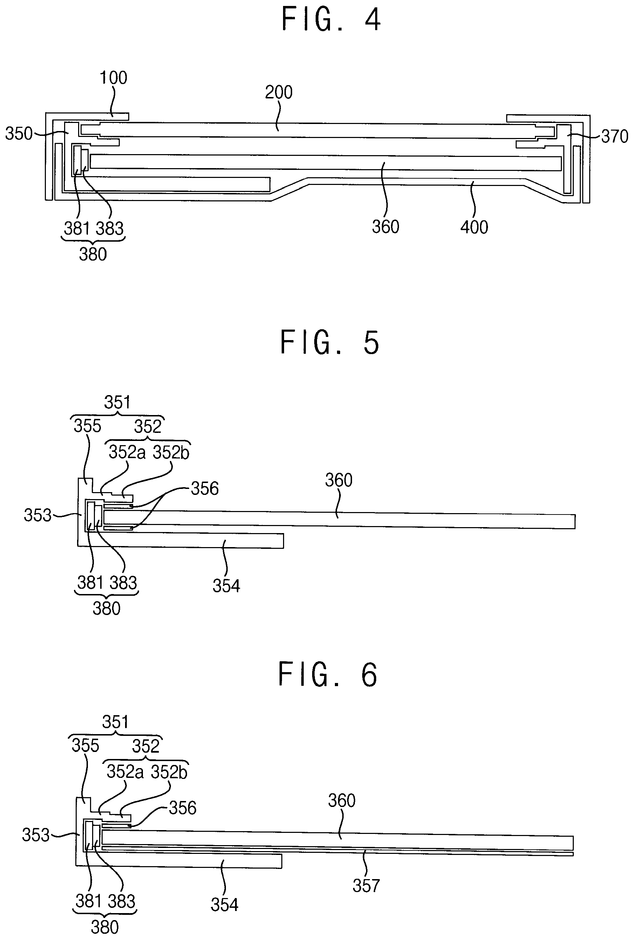

FIG. 4 is a cross-sectional view illustrating the display apparatus of FIG. 1.

Referring to FIG. 4, the display apparatus 1000 includes the upper frame 100, the display panel 200 to which light is provided to display an image, the backlight module 300 and the lower frame 400 combined with the upper frame 100.

The backlight module 300 includes the combining bar 350, the light guiding plate 360 and the light source 380. The light source 380 may include a light source part 383 which generates and provides light, and a circuit part 381 which provides power and/or drives the light source part 383. The backlight module 300 may include one or more of the light source part 383 and/or the circuit part 381. The combining bar 350 is disposed in the upper frame 100 and the lower frame 400, is configured to support elements of the display apparatus 1000, and is further an element of the backlight module 300.

The backlight module 300 may further include the supporting bar 370. The supporting bar 370 may be disposed substantially symmetrical to the combining bar 350. The elements of the display apparatus 1000 may be supported and fixed solely by the combining bar 350 and the supporting bar 370.

Although the display apparatus 1000 may further include other elements (not shown), the display apparatus 1000 includes the upper frame 100, the lower frame 400, the display panel 200 and the backlight module 300 as main elements. The combining bar 350 and the supporting bar 370 are a substitute for a plurality of separately provided and subsequently coupled molded parts in the display apparatus 1000, so that an overall manufacturing process of the display apparatus 1000 may be simplified. In addition, since the combining bar 350 is an integral member, deformation of the light guiding plate 360 by the heat may be reduced or effectively prevented although the light guiding plate 360 has relatively small thickness. The combining bar 350 is an integral member so that a gap between the upper plate 351 and the lower plate 354 may be uniformly maintained. Thus, the deformation of the light guiding plate 360 by the heat may be further reduced or effectively prevented, and the combining bar 350 maintains a thickness and a position of the light guiding plate 360 even though temperature of the display apparatus 1000 increases.

FIG. 5 is a cross-sectional view illustrating another exemplary embodiment of a backlight module according to the invention.

Referring to FIG. 5, the backlight module 300 includes a combining bar 350, a light source 380, a light guiding plate 360 and a separating part 356. The combining bar 350, the light source 380 and the light guiding plate 360 are substantially same as those explained in FIG. 4. Thus, any further detailed descriptions concerning the same elements will be omitted.

The separating part 356 may be disposed between the light guiding plate 360 and the combining bar 350. The separating part 356 may be adjacent to a light emitting surface of the light guide plate 360 and/or a rear surface opposing the light emitting surface. The combining bar 350 may include a conductive and/or metal material, and the light guiding plate 360 may include a non-conductive and/or plastic material. If the light guiding plate 360 directly makes contact with the combining bar 350, the light guiding plate 360 may be deformed.

In addition, the combining bar 350 directly makes contact with the light source 380, and may include the conductive and/or metal material which has relatively high thermal conductivity, so that heat generated from the light source 380 may be transmitted to the light guiding plate 360 through the combining bar 350. The separating part 356 includes material that may block heat, such as a non-conductive (e.g., insulating) and/or elastic material such as rubber so that the heat generated from the light source 380 may not be transmitted to the light guiding plate 360 through the combining bar 350. Although a width of the separating part 356 between the lower plate 354 and the light guiding plate 360 is relatively small in the illustrated exemplary embodiment, the separating part 356 may have width in the second direction D2 which is substantially the same as that of the lower plate 354. When the separating part 356 has the width which is the same as that of the lower plate 354, contact of the light guiding plate 360 with the combining bar 350 may be inherently reduced and effectively prevented.

FIG. 6 is a cross-sectional view illustrating still another exemplary embodiment of a backlight module according to the invention.

Referring to FIG. 6, the backlight module 300 includes a combining bar 350, a light source 380, a light guiding plate 360, a separating part 356 and a reflecting plate 357. The combining bar 350, the light source 380, the light guiding plate 360 and the separating part 356 are substantially same as those explained in FIG. 5. Thus, any further detailed descriptions concerning the same elements will be omitted.

The reflecting plate 357 is disposed under the light guiding plate 360 and is configured to reflect light transmitted toward a rear of the display apparatus 1000 from the light guiding plate 360 in an upward direction toward a front or display side of the display apparatus 1000. The reflecting plate 357 may have a planar size configured to cover (e.g., overlap) a whole the light guiding plate 360, in a plan view.

Various optical sheets (not shown) may be disposed on the light guiding plate 360, toward the front or display side of the display apparatus 1000. An upper plate 351 of the combining bar 350 is disposed corresponding to a non-display area of the display panel 200, so that a display area of the display panel 200 may be disposed starting from a distal end portion of the upper plate 351. The optical sheets may be disposed adjacent to the distal end of the upper plate 351 and under the display panel 200.

If necessary, a cross-sectional thickness of the upper plate 351 in the third direction D3 and/or a cross-sectional thickness of the panel supporting part 352 of the combining bar 350 may correspond to a total thickness of the optical sheets. Thus, the combining bar 350 may support and fix elements of the backlight module 300 such as the optical sheets, the light guiding plate 360, the light source 380, etc.

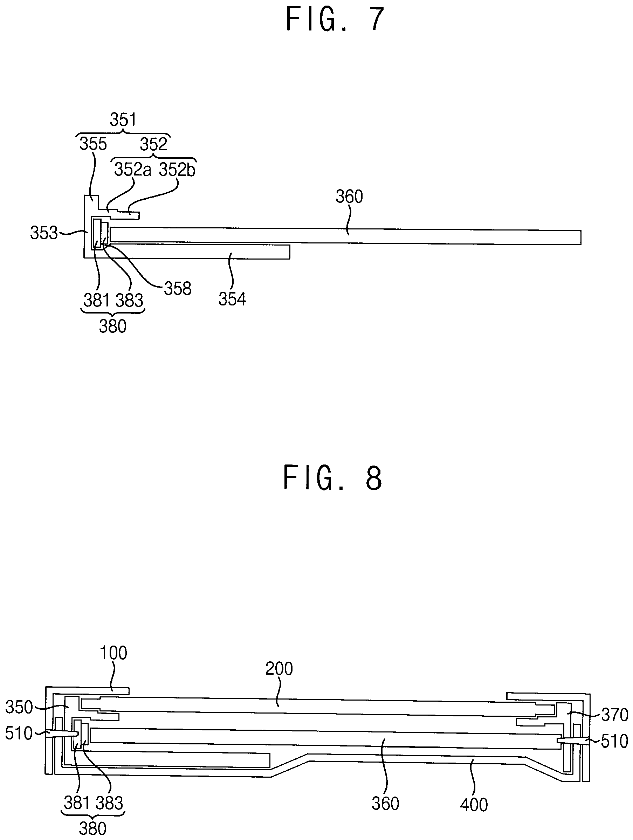

FIG. 7 is a cross-sectional view illustrating yet another exemplary embodiment of a backlight module according to the invention.

Referring to FIG. 7, the backlight module 300 includes a combining bar 350 including a lower plate 354, a light source 380 and a light guiding plate 360. The combining bar 350, the light source 380 and the light guiding plate 360 are substantially same as those explained in FIG. 5. Thus, any further detailed descriptions concerning the same elements will be omitted.

The lower plate 354 may further have a receiving groove 358 defined therein and receiving the light source 380. The light source 380 includes a light source part 383, and a circuit part 381 on which the light source part 383 is disposed. The light source part 383 may include an element such as a light emitting diode, but not being limited thereto or thereby. The circuit part 381 may include wiring structures for the light source 383. A thickness of the circuit part 381 taken in the third direction D3 may increase due to a space for the wiring structures. Accordingly, a height of extending plate 353 of the combining part 350 in the third direction D3 may be increased. Thus, a total thickness of the display apparatus 1000 taken in the third direction D3 may be increased due to the increased height of the extending plate 353. A thickness of the lower plate 354 where the receiving groove 358 is formed is smaller than a thickness of the other portion of the lower plate 354. Thus, the lower plate 354 may have a first thickness and a second thickness different from the first thickness. The combining bar 350 including the lower plate 354 may be formed by extruding a metal material, so that the lower plate 354 having the first and second thicknesses may be easily formed.

The receiving groove 358 which receiving the circuit part 381 may be defined in the lower plate 354 to decrease the total thickness of the display apparatus 1000. Thus, the total thickness of the display apparatus 1000 in the third direction D3 may not be increased due to the receiving groove 358 even though a thickness of the circuit part 381 in the third direction D3 is increased.

FIG. 8 is a cross-sectional view illustrating another exemplary embodiment of a display apparatus according to the invention.

Referring to FIG. 8, a display apparatus 1000 according to the illustrated example embodiment includes an upper frame 100, a display panel 200 to which light is provided to display an image, a backlight module 300, a lower frame 400 combined with the upper frame 100, and a side combining part 510.

The backlight module 300 includes a combining bar 350, a light guiding plate 360 and a light source 380. The light source 380 includes a light source part 383, and a circuit part 381 on which the light source part 383 is disposed. The combining bar 350 is disposed in the upper frame 100 and the lower frame 400 configured to support elements of the display apparatus 1000, and is further an element of the backlight module 300.

The backlight module 300 may further include a supporting bar 370. The supporting bar 370 may be disposed symmetric to the combining bar 350. The elements of the display apparatus 1000 may be supported and fixed by the combining bar 350 and the supporting bar 370.

The side combining part 510 may fix the upper frame 100, the lower frame 400 and the combining bar 350 in positions relative to each other. In addition, the side combining part 510 extends to the circuit part 381 to fix the light source 380 within the backlight module 300. The side combining part 510 may be received and pass partially or completely through an opening defined in the combining bar 350, the upper frame 100, the lower frame 400 and/or the light source 380. The side combining part 510 may be fixing means such as a screw, but is not limited thereto or thereby.

In addition, the side combining part 510 may fix the supporting bar 370, the upper frame 100 and the lower frame 400 in positions relative to each other. In addition, the side combining part 510 extends to the light guide plate 360 to fix the light guide plate 360 within the backlight module 300. The side combining part 510 may be received and pass partially or completely through an opening defined in the supporting bar 370, the upper frame 100, the lower frame 400 and/or the light guide plate 360.

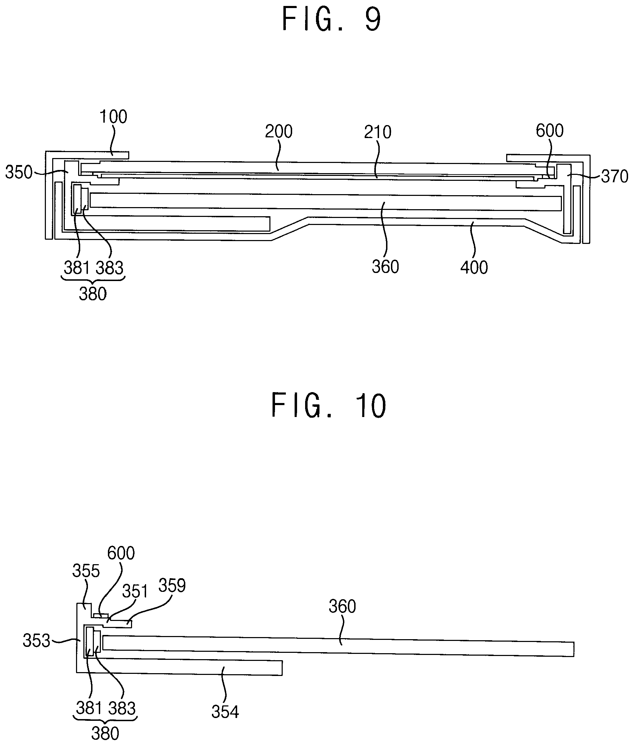

FIG. 9 is a cross-sectional view illustrating still another exemplary embodiment of a display apparatus according to the invention. FIG. 10 is a cross-sectional view illustrating a portion of an exemplary embodiment of a backlight module of the display apparatus of FIG. 9.

Referring to FIGS. 9 and 10, the display apparatus of the illustrated exemplary embodiment is substantially same as the display apparatus of FIG. 1, except for an optical element supporting portion 359 of the combining bar 350, a panel supporting member 600, an optical element 210, and a supporting bar 370. Thus, any further detailed descriptions concerning the same elements will be omitted.

The combining bar 350 includes an upper plate 351, an extending plate 353, a lower plate 354 and the optical element supporting portion 359.

The optical element supporting portion 359 is extended from the upper plate 351. An upper surface of the optical element supporting portion 359 is lower than an upper surface of the upper plate 351, so that a stepped portion is formed where the upper plate 351 and the optical element supporting portion 359 make contact with each other. A boundary of the optical element 210 is disposed on the optical element supporting portion 359, so that the optical element supporting portion 359 supports the optical element 210.

The optical element 210 is disposed between a display panel 200 and a light guiding plate 360. The optical element 210 may make brightness of a light emitted from the light guiding plate 360 uniform. The optical element 210 may include one or more optical sheet. In one exemplary embodiment, for example, the optical element 210 may include a protecting sheet, a prism sheet and a diffusion sheet. Alternatively, the optical element 210 may include any of a number of various optical sheets. Many modifications of the optical element 210 may be possible.

The panel supporting member 600 is disposed on the upper plate 351. The panel supporting member 600 may be disposed on the second horizontal surface of the upper plate 351 overlapping the boundary or edge of the display panel 200, but not overlapping the optical element 210, in the plan view. The panel supporting member 600 is disposed between the boundary or edge of the display panel 200 and the upper plate 351, and is configured to support the display panel 200 thereon. The panel supporting member 600 includes an insulating and/or elastic material, so that the panel supporting member 600 may absorb a shock applied to the display panel 200. In one exemplary embodiment, for example, the panel supporting member 600 may include rubber. In addition, the panel supporting member 600 may be an adhesive member such as a double-side tape fixing the display panel 200 and the combining bar 350 to each other.

In addition, although the display apparatus according to the illustrated exemplary embodiment includes the panel supporting member 600, the display panel 200 may be disposed directly on the upper plate 351 in an alternative exemplary embodiment.

The backlight module 300 may further include the supporting bar 370. The supporting bar 370 may be disposed symmetric to the combining bar 350. In addition, the panel supporting member 600 may be disposed between the display panel 200 and the combining bar 350. In addition, the supporting bar 370 may support the optical element 210 similarly to the combining bar 350. Thus, the elements of the display apparatus 1000 may be supported and fixed by the combining bar 350 and the supporting bar 370.

According one or more exemplary embodiment of the invention, although the light guiding plate has relatively small thickness, the combining bar is an integral member, so that the deformation of the light guiding plate by the heat may be reduced or effectively prevented.

In addition, the combining bar supports and fixes a plurality of elements of the display apparatus, so that a manufacturing process of the display apparatus may be simplified and manufacturing cost may be decreased.

In addition, the combining bar is formed (e.g., provided) by an extrusion molding process, so that the combining bar may be easily manufactured even though the combining bar has various cross-sectional thicknesses.

The foregoing is illustrative of the invention and is not to be construed as limiting thereof. Although a few exemplary embodiments of the invention have been described, those skilled in the art will readily appreciate that many modifications are possible in the exemplary embodiments without materially departing from the novel teachings and advantages of the invention. Accordingly, all such modifications are intended to be included within the scope of the invention as defined in the claims. In the claims, means-plus-function clauses are intended to cover the structures described herein as performing the recited function and not only structural equivalents but also equivalent structures. Therefore, it is to be understood that the foregoing is illustrative of the invention and is not to be construed as limited to the specific exemplary embodiments disclosed, and that modifications to the disclosed exemplary embodiments, as well as other exemplary embodiments, are intended to be included within the scope of the appended claims. The invention is defined by the following claims, with equivalents of the claims to be included therein.

## Claims

1. A display apparatus (1000) comprising:
a display panel (200) which receives light to display an image;
a backlight module (300) comprising:
a combining bar (350) comprising an upper plate (351) supporting the display panel (200), a lower plate (354), and an extending plate (353) connecting the upper plate (351) to the lower plate (354),
a light source (380) disposed in a space formed by the upper plate (351), the lower plate (354) and the extending plate (353), and
a light guiding plate (360) between the upper plate (351) and the lower plate (354);
**characterized by**
an upper frame (100) and a lower frame (400) combined with each other;
the combining bar (350) is disposed between the upper frame (100) and the lower frame (400) of the display apparatus (1000) for supporting the upper frame (100) and the lower frame (400);
a receiving space defined by the upper frame (100) and the lower frame (400) receiving the display panel (200) and the backlight module (300).

2. The display apparatus (1000) of claim 1, wherein the upper plate (351), the lower plate (354) and the extending plate (353) are integral with each other and define a single, unitary, indivisible combining bar (350).

3. The display apparatus (1000) of claim 2, wherein at least two of a cross-sectional thickness of the lower plate (354), a cross-sectional thickness of the upper plate (351) and a cross-sectional thickness of the extending plate (353) are different.

4. The display apparatus (1000) of claim 3, wherein a cross-sectional thickness of the lower plate (354) is larger than a cross-sectional thickness of the upper plate (351).

5. The display apparatus (1000) of claim 2, wherein the lower plate (354) extends further from the extending plate (353) than the upper plate (351).

6. The display apparatus (1000) of claim 2, wherein the combining bar (350) is an extrusion-molded member and especially comprises aluminum.

7. The display apparatus (1000) of claim 1, wherein the upper plate (351) of the combining bar (350) further comprises a panel guiding portion (355) with an inner side surface facing a side surface of the display panel (200) and including a horizontal portion of the upper plate (351) facing an inner side of the upper frame (100).

8. The display apparatus (1000) of claim 7, wherein the panel guiding portion (355) makes contact with the side surface of the display panel (200) and is configured to fix the display panel (200) in the display apparatus (1000).

9. The display apparatus of claim 1, further comprising a side combining part (510) respectively combining the extending plate (353) of the combining bar (350) with the upper frame (100) and the lower frame (400) to fix the upper frame (100), the lower frame (400) and the combining bar (350) in positions relative to each other.

10. The display apparatus (1000) of claim 1, wherein the combining bar (350) further comprises a receiving groove (358) defined in the lower plate (354) and configured to receive the light source (380).

11. The display apparatus (1000) of claim 1, further comprising an insulating part between the upper plate (351) and the light guiding plate (360), and between the lower plate (354) and the light guiding plate (360).

12. The display apparatus (1000) of claim 1, further comprising:
an optical element (210) between the display panel (200) and the light guiding plate (360), and
wherein the upper plate (351) further comprises an optical element supporting portion (359) overlapping the optical element (210) and the display panel (200).

13. The display apparatus (1000) of claim 1, wherein the upper plate (351) further comprises a supporting portion (352) comprising a first supporting portion (352a) and a second supporting portion (352b) extending from the first supporting portion (352a), and
an upper surface of the first supporting portion (352a) and an upper surface of the second supporting portion (352b) have different heights from the lower plate (354).

14. The display apparatus (1000) of claim 13, wherein the display panel (200) has a first thickness at a boundary or edge of the display panel (200), and a second thickness at a peripheral portion of the display panel being adjacent to the boundary or edge, the second thickness is greater than the first thickness,
the first supporting portion (352a) supports and contacts with the boundary or edge of the display panel (200), and the second supporting portion (352b) supports and contacts with the peripheral portion of the display panel (200).

15. The display apparatus (1000) of claim 10, wherein the lower plate (354) has a first portion and a second portion having a thickness different from a thickness of the first portion, wherein the receiving groove (358) is formed in the second portion which thickness is smaller than the thickness of the first portion.

16. The display apparatus (1000) of claim 15, wherein the light source (380) is disposed on the second portion of the lower plate (354).

17. The display apparatus (1000) of claim 1, wherein the lower plate (354) extends further from the extending plate (353) than the upper plate (351).

18. The display apparatus (1000) of claim 1, wherein the extending (353) plate is perpendicular to the upper plate (351) and the lower plate (354).

19. The display apparatus (1000) of claim 9, wherein the side combining part (510) is received and passes partially or completely through an opening defined in the combining bar (350), the upper frame (100), the lower frame (400) and/or the light source (380).

20. The display apparatus (1000) of claim 19, wherein in addition a side combining part (510) fixes a supporting bar (370), which is disposed opposite to the combining bar (350) and supports the backlight module (300), the upper frame (100) and the lower frame (400) in positions relative to each other.

## Patentansprüche

1. Anzeigevorrichtung (1000), umfassend:
ein Anzeigepanel (200), das Licht zum Anzeigen eines Bildes empfängt;
ein Hinterleuchtungsmodul (300), umfassend:
eine Verbindungsleiste (350) mit einer oberen Platte (351), die das Anzeigepanel (200) trägt, einer unteren Platte (354) und einer Erweiterungsplatte (353), welche die obere Platte (351) mit der unteren Platte (354) verbindet,
eine Lichtquelle (380), die in einem durch die obere Platte (351), die untere Platte (354) und die Erweiterungsplatte (353) gebildeten Raum angeordnet ist, und eine Lichtleitplatte (360) zwischen der oberen Platte (351) und der unteren Platte (354);
**gekennzeichnet durch**
einen oberen Rahmen (100) und einen unteren Rahmen (400), die miteinander kombiniert sind;
wobei die Verbindungsleiste (350) zwischen dem oberen Rahmen (100) und dem unteren Rahmen (400) der Anzeigevorrichtung (1000) zum Tragen des oberen Rahmens (100) und des unteren Rahmens (400) angeordnet ist;
einen Aufnahmeraum, der durch den oberen Rahmen (100) und den unteren Rahmen (400) definiert ist, zur Aufnahme des Anzeigepanels (200) und des Hinterleuchtungsmoduls (300).

2. Anzeigevorrichtung (1000) nach Anspruch 1, wobei die obere Platte (351), die untere Platte (354) und die Erweiterungsplatte (353) einstückig miteinander ausgebildet sind und eine einzige, einheitliche, unteilbare Verbindungsleiste (350) bilden.

3. Anzeigevorrichtung (1000) nach Anspruch 2, wobei wenigstens zwei der folgenden Maße voneinander verschieden sind: eine Querschnittsdicke der unteren Platte (354), eine Querschnittsdicke der oberen Platte (351) und eine Querschnittsdicke der Erweiterungsplatte (353).

4. Anzeigevorrichtung (1000) nach Anspruch 3, wobei eine Querschnittsdicke der unteren Platte (354) größer als eine Querschnittsdicke der oberen Platte (351) ist.

5. Anzeigevorrichtung (1000) nach Anspruch 2, wobei die untere Platte (354) sich weiter von der Erweiterungsplatte (353) erstreckt als die obere Platte (351).

6. Anzeigevorrichtung (1000) nach Anspruch 2, wobei die Verbindungsleiste (350) ein Stranggussteil ist und insbesondere Aluminium umfasst.

7. Anzeigevorrichtung (1000) nach Anspruch 1, wobei die obere Platte (351) der Verbindungsleiste (350) ferner einen Panelführungsabschnitt (355) umfasst, mit einer inneren Seitenfläche, die einer Seitenfläche des Anzeigepanels (200) zugewandt ist und einen horizontalen Abschnitt der oberen Platte (351) enthält, der einer Innenseite des oberen Rahmens (100) zugewandt ist.

8. Anzeigevorrichtung (1000) nach Anspruch 7, wobei der Panelführungsabschnitt (355) mit der Seitenfläche des Anzeigepanels (200) in Kontakt kommt und dazu eingerichtet ist, das Anzeigepanel (200) in der Anzeigevorrichtung (1000) zu befestigen.

9. Anzeigevorrichtung nach Anspruch 1, ferner umfassend ein Seitenverbindungsteil (510), das jeweils die Erweiterungsplatte (353) der Verbindungsleiste (350) mit dem oberen Rahmen (100) und dem unteren Rahmen (400) verbindet, um den oberen Rahmen (100), den unteren Rahmen (400) und die Verbindungsleiste (350) in Positionen relativ zueinander zu fixieren.

10. Anzeigevorrichtung (1000) nach Anspruch 1, wobei die Verbindungsleiste (350) ferner umfasst: eine Aufnahmenut (358), die in der unteren Platte (354) definiert und zur Aufnahme der Lichtquelle (380) eingerichtet ist.

11. Anzeigevorrichtung (1000) nach Anspruch 1, ferner umfassend ein Isolierteil zwischen der oberen Platte (351) und der Lichtleitplatte (360) und zwischen der unteren Platte (354) und der Lichtleitplatte (360).

12. Anzeigevorrichtung (1000) nach Anspruch 1, ferner umfassend:
ein Optikelement (210) zwischen dem Anzeigepanel (200) und der Lichtleitplatte (360), und
wobei die obere Platte (351) ferner einen Optikelement-Stützabschnitt (359) umfasst, der das Optikelement (210) und das Anzeigepanel (200) überlappt.

13. Anzeigevorrichtung (1000) nach Anspruch 1, wobei die obere Platte (351) ferner einen Stützabschnitt (352) umfasst, der einen ersten Stützabschnitt (325a) und einen zweiten Stützabschnitt (352b), welcher sich vom ersten Stützabschnitt (352a) weg erstreckt, umfasst, und
eine obere Fläche des ersten Stützabschnitts (352a) und eine obere Fläche des zweiten Stützabschnitts (352b) unterschiedliche Höhen gegenüber der unteren Platte (354) aufweisen.

14. Anzeigevorrichtung (1000) nach Anspruch 13, wobei das Anzeigepanel (200) eine erste Dicke an einer Grenze oder einem Rand des Anzeigepanels (200) und eine zweite Dicke an einem peripheren Abschnitt des Anzeigepanels, benachbart der Grenze oder dem Rand, aufweist, wobei die zweite Dicke größer als die erste Dicke ist,
der erste Stützabschnitt (352a) die Grenze oder den Rand des Anzeigepanels (200) stützt und kontaktiert, und der zweite Stützabschnitt (352b) den peripheren Abschnitt des Anzeigepanels (200) stützt und kontaktiert.

15. Anzeigevorrichtung (1000) nach Anspruch 10, wobei die untere Platte (354) einen ersten Abschnitt und einen zweiten Abschnitt mit einer anderen Dicke als der erste Abschnitt aufweist, wobei die Aufnahmenut (358) im zweiten Abschnitt ausgebildet ist, dessen Dicke kleiner als die Dicke des ersten Abschnitts ist.

16. Anzeigevorrichtung (1000) nach Anspruch 15, wobei die Lichtquelle (380) auf dem zweiten Abschnitt der unteren Platte (354) angeordnet ist.

17. Anzeigevorrichtung (1000) nach Anspruch 1, wobei die untere Platte (354) sich weiter von der Erweiterungsplatte (353) erstreckt als die obere Platte (351).

18. Anzeigevorrichtung (1000) nach Anspruch 1, wobei die Erweiterungsplatte (353) senkrecht zur oberen Platte (351) und zur unteren Platte (354) angeordnet ist.

19. Anzeigevorrichtung (1000) nach Anspruch 9, wobei der Seitenverbindungsabschnitt (510) in einer Öffnung, die in der Verbindungsleiste (350), dem oberen Rahmen (100), dem unteren Rahmen (400) und/oder der Lichtquelle (380) definiert ist, aufgenommen ist und teilweise oder ganz durch diese hindurch läuft.

20. Anzeigevorrichtung (1000) nach Anspruch 19, wobei zusätzlich ein Seitenverbindungsteil (510) eine Stützleiste (370) befestigt, die gegenüber der Verbindungsleiste (350) angeordnet ist und das Hinterleuchtungsmodul (300), den oberen Rahmen (100) und den unteren Rahmen (400) in Positionen relativ zueinander fixiert.

## Revendications

1. Appareil d'affichage (1000) comprenant :
un panneau d'affichage (200) qui reçoit de la lumière pour afficher une image ;
un module de rétroéclairage (300) comprenant :
une barre combinée (350) comprenant une plaque supérieure (351) qui supporte le panneau d'affichage (200), une plaque inférieure (354) et une plaque d'extension (353) qui relie la plaque supérieure (351) à la plaque inférieure (354),
une source lumineuse (380) disposée dans un espace formé par la plaque supérieure (351), la plaque inférieure (354) et la plaque d'extension (353), et
une plaque guide d'ondes lumineuses (360) entre la plaque supérieure (351) et la plaque inférieure (354) ;
**caractérisé en ce qu'**il comprend
un cadre supérieur (100) et un cadre inférieur (400) combinés l'un à l'autre ;
la barre combinée (350) est disposée entre le cadre supérieur (100) et le cadre inférieur (400) de l'appareil d'affichage (1000) pour supporter le cadre supérieur (100) et le cadre inférieur (400) ;
un espace de réception défini par le cadre supérieur (100) et le cadre inférieur (400) et recevant le panneau d'affichage (200) et le module de rétroéclairage (300).

2. Appareil d'affichage (1000) selon la revendication 1, dans lequel la plaque supérieure (351), la plaque inférieure (354) et la plaque d'extension (353) sont solidaires les unes des autres et définissent une seule barre combinée (350) unitaire et indivisible.

3. Appareil d'affichage (1000) selon la revendication 2, dans lequel au moins deux valeurs parmi une épaisseur en section de la plaque inférieure (354), une épaisseur en section de la plaque supérieure (351) et une épaisseur en section de la plaque d'extension (353) sont différentes.

4. Appareil d'affichage (1000) selon la revendication 3, dans lequel une épaisseur en section de la plaque inférieure (354) est plus grande qu'une épaisseur en section de la plaque supérieure (351).

5. Appareil d'affichage (1000) selon la revendication 2, dans lequel la plaque inférieure (354) s'étend plus loin de la plaque d'extension (353) que la plaque supérieure (351).

6. Appareil d'affichage (1000) selon la revendication 2, dans lequel la barre combinée (350) est un élément moulé par extrusion et contient en particulier de l'aluminium.

7. Appareil d'affichage (1000) selon la revendication 1, dans lequel la plaque supérieure (351) de la barre combinée (350) comprend en outre une partie de guidage du panneau (355) dont une surface latérale intérieure fait face à une surface latérale du panneau d'affichage (200) et qui comprend une partie horizontale de la plaque supérieure (351) faisant face à une face intérieure du cadre supérieur (100).

8. Appareil d'affichage (1000) selon la revendication 7, dans lequel la partie de guidage du panneau (355) vient en contact avec la surface latérale du panneau d'affichage (200) et est configurée pour fixer le panneau d'affichage (200) dans l'appareil d'affichage (1000).

9. Appareil d'affichage selon la revendication 1, comprenant en outre une pièce combinant les côtés (510) qui combine, respectivement, la plaque d'extension (353) de la barre combinée (350) avec le cadre supérieur (100) et le cadre inférieur (400) pour fixer le cadre supérieur (100), le cadre inférieur (400) et la barre combinée (350) dans une position relative les uns par rapport aux autres.

10. Appareil d'affichage (1000) selon la revendication 1, dans lequel la barre combinée (350) comprend en outre une rainure de réception (358) définie dans la plaque inférieure (354) et configurée pour recevoir la source lumineuse (380).

11. Appareil d'affichage (1000) selon la revendication 1, comprenant en outre une partie isolante entre la plaque supérieure (351) et la plaque guide d'ondes lumineuses (360) et entre la plaque inférieure (354) et la plaque guide d'ondes lumineuses (360).

12. Appareil d'affichage (1000) selon la revendication 1, comprenant en outre un élément optique (210) entre le panneau d'affichage (200) et la plaque guide d'ondes lumineuses (360), et
dans lequel la plaque supérieure (351) comprend en outre une partie de support de l'élément optique (359) qui chevauche l'élément optique (210) et le panneau d'affichage (200).

13. Appareil d'affichage (1000) selon la revendication 1, dans lequel la plaque supérieure (351) comprend en outre une partie de support (352) comprenant une première partie de support (352a) et une deuxième partie de support (352b) qui s'étend à partir de la première partie de support (352a), et
une surface supérieure de la première partie de support (352a) et une surface supérieure de la deuxième partie de support (352b) ont des hauteurs différentes par rapport à la plaque inférieure (354).

14. Appareil d'affichage (1000) selon la revendication 13, dans lequel le panneau d'affichage (200) a une première épaisseur sur une limite ou un bord du panneau d'affichage (200) et une deuxième épaisseur dans une partie périphérique du panneau d'affichage adjacente à la limite ou au bord, la deuxième épaisseur étant supérieure à la première épaisseur,
la première partie de support (352a) supporte et vient en contact avec la limite ou le bord du panneau d'affichage (200), et la deuxième partie de support (352b) supporte et vient en contact avec la partie périphérique du panneau d'affichage (200).

15. Appareil d'affichage (1000) selon la revendication 10, dans lequel la plaque inférieure (354) possède une première partie et une deuxième partie dont l'épaisseur est différente de celle de la première partie, la rainure de réception (358) étant formée dans la deuxième partie dont l'épaisseur est inférieure à celle de la première partie.

16. Appareil d'affichage (1000) selon la revendication 15, dans lequel la source lumineuse (380) est disposée sur la deuxième partie de la plaque inférieure (354).

17. Appareil d'affichage (1000) selon la revendication 1, dans lequel la plaque inférieure (354) s'étend plus loin de la plaque d'extension (353) que la plaque supérieure (351).

18. Appareil d'affichage (1000) selon la revendication 1, dans lequel la plaque étendue (353) est perpendiculaire à la plaque supérieure (351) et à la plaque inférieure (354).

19. Appareil d'affichage (1000) selon la revendication 9, dans lequel la pièce combinant les côtés (510) est reçue et passe partiellement ou complètement à travers une ouverture définie dans la barre combinée (350), le cadre supérieur (100), le cadre inférieur (400) et/ou la source lumineuse (380).

20. Appareil d'affichage (1000) selon la revendication 19, dans lequel une pièce combinant les côtés (510) fixe en outre une barre de support (370) qui est disposée en face de la barre combinée (350) et supporte le module de rétroéclairage (300), le cadre supérieur (100) et le cadre inférieur (400) dans des positions relatives les uns par rapport aux autres.
